# EUROPÄISCHE PATENTANMELDUNG

(11) **EP 4 825 681 A1**
(43) Veröffentlichungstag der Anmeldung: **21.10.2026**
(21) Anmeldenummer: 26168941.8
(22) Anmeldetag: 30.03.2026
(51) Int. Cl.: B60W 30/09, B60W 40/08, B60W 40/12, B62D 15/02

(54) **VERFAHREN ZUM BETREIBEN EINES ASSISTENZSYSTEMS EINES ZUMINDEST TEILWEISE ASSISTIERT BETRIEBENEN KRAFTFAHRZEUGS, COMPUTERPROGRAMMPRODUKT SOWIE ASSISTENZSYSTEM**

(30) Priorität: 16.04.2025 DE 102025114833
(71) Anmelder: Volkswagen Aktiengesellschaft, 38440 Wolfsburg (DE)
(72) Erfinder: Klingemann, Timo, 38440 Wolfsburg (DE); Milch, Stefan, 38440 Wolfsburg (DE)

(57) **Zusammenfassung**

Die Erfindung betrifft ein Verfahren zum Betreiben eines Assistenzsystems (2) eines zumindest teilweise assistiert betriebenen Kraftfahrzeugs (1), mit den Schritten: Bestimmen einer Soll-Trajektorie (18) für ein teilautomatisiertes Fahrmanöver mittels einer elektronischen Recheneinrichtung (12) des Assistenzsystems (2), wobei die Soll-Trajektorie (18) zumindest bereichsweise einen Querbeschleunigungsanteil aufweist; Bestimmen einer system-inhärenten Reibkraft (15) einer Lenkanlage (13) des Kraftfahrzeugs (1) mittels der elektronischen Recheneinrichtung (12); Bestimmen eines assistierten Querbeschleunigungssignals (17) für die Soll-Trajektorie (18) mittels der elektronischen Recheneinrichtung (12); und Adaptieren des assistierten Querbeschleunigungssignals (17) in Abhängigkeit von der bestimmten system-inhärenten Reibkraft (15) mittels der elektronischen Recheneinrichtung (12). Ferner betrifft die Erfindung ein Computerprogrammprodukt sowie ein Assistenzsystem (2).

## Beschreibung

Die nachfolgende Erfindung betrifft ein Verfahren zum Betreiben eines Assistenzsystems eines zumindest teilweise assistiert betriebenen Kraftfahrzeugs gemäß dem geltenden Patentanspruch 1. Ferner betrifft die Erfindung ein entsprechendes Computerprogrammprodukt sowie ein entsprechendes Assistenzsystem.

Aus dem Stand der Technik sind beispielsweise so genannte automatische Ausweichsysteme, beispielsweise in Form von Sicherheitsfunktionen, bereits bekannt, beispielsweise wenn ein Fahrer des Kraftfahrzeugs unaufmerksam ist und das Assistenzsystem eine bevorstehende Kollision erkennt. Oftmals wird die Kollision durch ein entsprechendes automatisiertes Bremsen vermieden und wenn dies auch nicht möglich ist, kann in bestimmten Situationen die Kollision durch einen Querversatz des Kraftfahrzeugs zusätzlich noch verhindert werden.

Für eine sichere Umsetzung des geplanten Manövers ist es hierzu erforderlich, dass die geplante Trajektorie, welche auch als Soll-Trajektorie bezeichnet werden kann, auch umgesetzt werden kann. Hierbei kann jedoch dann der Fahrer als eine Störgröße fungieren, wenn dieser beispielsweise seine Hände auf dem Lenkrad hat.

Insbesondere automatische Ausweichsysteme sind jedoch ein wichtiger Bestandteil moderner Fahrerassistenzsysteme und tragen zur Erhöhung der Verkehrssicherheit bei. Die automatische Notbremsung (AEB - automated emergency braking) ist ein solches System, das eingreift, um einen drohenden Zusammenstoß zu vermeiden oder die Folgen abzuschwächen. Es nutzt Sensoren und Kameras, um den Abstand und die Geschwindigkeit anderer Kraftfahrzeuge oder Hindernisse zu berechnen und entsprechend zu reagieren. Wenn eine Kollision unausweichlich ist, kann ein anderes System, insbesondere die automatische Ausweichregelung, eingreifen.

Die automatische Ausweichregelung ermöglicht es dem Kraftfahrzeug selbständig auszuweichen, um eine Kollision zu vermeiden. Hierfür erfordert es ein komplexes Zusammenspiel von Sensorik, Algorithmen und Aktuatoren, um die geplante Trajektorie des Kraftfahrzeugs anzupassen und sicher ausweichen zu können.

Ein wichtiger Aspekt bei der sicheren Umsetzung eines Ausweichmanövers ist dabei der Fahrer selbst. Dieser kann, wie bereits erwähnt, als Störgröße wirken, wenn er beispielsweise versucht, manuell einzugreifen oder die Kontrolle über das Kraftfahrzeug übernimmt. Daher ist es unerlässlich, dass das System so gestaltet ist, dass der Fahrer jederzeit, insbesondere zumindest im Notmanöver, übersteuert werden kann und die Interaktion zwischen Mensch und Maschine reibungslos verläuft.

Die DE 10 2017 201 231 B1 beschreibt ein Verfahren zum Betreiben eines Ausweichassistenzsystems eines Kraftfahrzeugs, welches ein Lenksystem mit einer Servolenkunterstützung aufweist, die eine Lenkkraft bei Bedarf durch ein Zusatzlenkmoment verstärkt, wobei diese Verstärkung in Abhängigkeit von der Lenkkraft und auf Basis wenigstens einer vordefinierten Verstärkungskurve erfolgt.

Die DE 10 2016 121 474 A1 betrifft ein Verfahren zum Betreiben eines Fahrerassistenzsystems eines Kraftfahrzeugs, bei welchem das Kraftfahrzeug zumindest semi-autonom manövriert wird, eine Übergabeposition für eine Übergabe an einen Fahrer des Kraftfahrzeugs zum manuellen Führen des Kraftfahrzeugs bestimmt wird und das zumindest semi-autonome Manövrieren des Kraftfahrzeugs an der Übergabeposition beendet wird.

Die DE 10 2020 131 054 B4 betrifft eine Fahrerunterstützungsvorrichtung mit: einer Objektinformationsbezugsvorrichtung, die konfiguriert ist, um ein dreidimensionales Objekt, das sich in Front eines eigenen Fahrzeugs befindet, und eine Spur, auf der das eigene Fahrzeug fährt, zu erfassen, und um Informationen, die das dreidimensionale Objekt und die Spur angeben, als Objektinformationen zu beziehen.

Es herrscht somit Bedarf im Stand der Technik, ein Verfahren bereitzustellen, bei welchem bei einem entsprechenden Fahrmanöver, insbesondere bei einem automatisierten Notmanöver, eine potentielle Störung des Fahrers verhindert werden kann.

Aufgabe der vorliegenden Erfindung ist es, ein Verfahren, ein Computerprogrammprodukt sowie ein Assistenzsystem zu schaffen, mittels welchen ein sicherer Betrieb des Kraftfahrzeugs in einer Straßenumgebung realisiert werden kann. Insbesondere ist es Aufgabe der folgenden Erfindung ein Notmanöver zuverlässig durchführen zu können.

Diese Aufgabe wird durch ein Verfahren, ein Computerprogrammprodukt sowie ein Assistenzsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Betreiben eines Assistenzsystems eines zumindest teilweise assistiert betriebenen Kraftfahrzeugs. Es wird eine Soll-Trajektorie für ein teilautomatisiertes Fahrmanöver mittels einer elektronischen Recheneinrichtung des Assistenzsystems bestimmt, wobei die Soll-Trajektorie zumindest bereichsweise einen Querbeschleunigungsanteil aufweist. Es wird eine system-inhärente Reibkraft einer Lenkanlage des Kraftfahrzeugs mittels der elektronischen Recheneinrichtung bestimmt. Es wird ein assistiertes Querbeschleunigungssignal für die Soll-Trajektorie mittels der elektronischen Recheneinrichtung bestimmt. Es wird das assistierte Querbeschleunigungssignal in Abhängigkeit von der bestimmten system-inhärenten Reibkraft mittels der elektronischen Recheneinrichtung adaptiert.

Somit ist es ermöglicht, dass auch die system-inhärente Reibkraft entsprechend berücksichtigt werden kann. Insbesondere kann somit beispielsweise ein Querbeschleunigungssignal, welches auf Basis des Assistenzsystems alleine bestimmt worden ist, entsprechend adaptiert werden, da insbesondere nun auch die entsprechenden Reibungen innerhalb der Lenkanlage, welche beispielsweise die Lenkeinrichtung, Lenkgestänge sowie Räder betrifft, mitberücksichtigt werden können. Somit kann im zumindest teilweise automatisierten Betrieb beziehungsweise im zumindest teilweise assistierten Betrieb ein verbessertes Notmanöver eingeleitet werden, da die entsprechenden Reibwerte/Reibkräfte mitberücksichtigt werden, so dass insbesondere das Kraftfahrzeug im Wesentlichen der Soll-Trajektorie folgen kann, wodurch die Sicherheit im Straßenverkehr entsprechend erhöht werden kann.

Insbesondere kann somit ein sicherer Betrieb des Kraftfahrzeugs, beispielsweise in einem Notmanöver, realisiert werden. Insbesondere kann somit beim zumindest teilweise automatisierten Betrieb, beispielsweise bei Level 2 gemäß SAE-Standard oder höher, der Reibwert der Lenkanlage für beispielsweise ein entsprechendes Ausweichmanöver mitberücksichtigt werden. Somit kann der Reibwert als Störgröße bestimmt werden und diese Störgröße beim Erzeugen des tatsächlichen assistierten Querbeschleunigungssignals berücksichtigt werden, so dass die Soll-Trajektorie auch im Wesentlichen tatsächlich erreicht werden kann. Die Soll-Trajektorie weist dabei insbesondere zumindest einen Querbeschleunigungsanteil auf, insbesondere somit ein Lenkmanöver. Diese Lenkmanöver kann über das assistierte Querbeschleunigungssignal entsprechend erzeugt werden. Somit kann das assistierte Querbeschleunigungssignal beispielsweise an eine Querbeschleunigungseinrichtung übermittelt werden, beispielsweise an die entsprechenden Räder, und somit eine Lenkung des Kraftfahrzeugs bewirken. Insbesondere um nun im Notmanöver eine entsprechende Totzeit durch den Reibwert überwinden zu können, wird der Reibwert bereits vorher, zumindest während der Bestimmung der Soll-Trajektorie, entsprechend bestimmt und bereits beim Erzeugen des assistierten Querbeschleunigungssignals mitberücksichtigt, so dass die Soll-Trajektorie im Wesentlichen erreicht werden kann. Somit kann beispielsweise eine Kollision mit Objekten und/oder Personen entsprechend verhindert werden.

Insbesondere sind nämlich automatische Ausweichsysteme, wie vorliegend das Assistenzsystem, als Sicherheitsfunktion bekannt, wenn der Fahrer beispielsweise unaufmerksam ist und das Assistenzsystem eine bevorstehende Kollision erkennt. Oftmals wird die Kollision dann durch eine Bremsung oder auch durch das entsprechende Ausweichmanöver verhindert. Automatische Ausweichsysteme können als Level 2-Funktionen von dem Fahrer beziehungsweise der Person jedoch jederzeit übersteuert werden. Ein erfolgreiches automatisches Ausweichmanöver setzt jedoch voraus, dass der entsprechende Systemeingriff durch den Fahrer nicht unbeabsichtigt unterbunden wird, beispielsweise dadurch, dass der Fahrer die Hände zu fest an eine Lenkeinrichtung hält. Des Weiteren ist es notwendig, dass auch die entsprechenden Trägheitsmomente auf Basis der Reibung innerhalb der Lenkanlage mitberücksichtigt werden. Im Extremfall kann nämlich das Assistenzsystem dann keinen Querversatz aufbauen, und es kann eine entsprechende Kollision stattfinden.

Wie bereits erwähnt, ist das Assistenzsystem insbesondere zum Durchführen eines Ausweichmanövers ausgebildet. Alternativ oder ergänzend kann das Assistenzsystem beispielsweise jedoch auch in Form eines Spurhalteassistenten, eines Spurwechselassistenten oder auch eines Abbiegeassistenten oder dergleichen ausgebildet sein. Das Assistenzsystem ist zumindest zum Aufbauen eines zumindest teilweise automatisierten Querversatzes des Kraftfahrzeugs ausgebildet, und somit für alle Assistenzsysteme einsetzbar, bei welchen ein Querversatz in der Soll-Trajektorie bestimmt ist.

Insbesondere kann somit die geschwindigkeitsabhängige, system-inhärente Reibkraft, insbesondere das Reibmoment der Lenkung und nachgelagerter Fahrwerkskomponenten beispielsweise mitberücksichtigt werden, beispielsweise in Form einer fahrzeugspezifischen Bedatung.

Gemäß einer vorteilhaften Ausgestaltungsform wird bei der system-inhärenten Reibkraft ein Reibmoment einer Lenkeinrichtung der Lenkanlage und/oder ein Reibmoment einer Fahrwerkskomponente der Lenkanlage berücksichtigt. Die Lenkeinrichtung kann dabei insbesondere in Form eines Lenkrades oder dergleichen bereitgestellt werden. Die Fahrwerkskomponente kann beispielsweise die Federung sowie entsprechenden Spurstangen betreffen. Durch die Bestimmung der Reibwerte dieser einzelnen Einrichtungen kann somit zuverlässig das Querbeschleunigungssignal adaptiert werden, um die Soll-Trajektorie im Wesentlichen erreichen zu können.

Weiterhin kann vorgesehen sein, dass die system-inhärente Reibkraft auf Basis von zumindest einem abgespeicherten Kennfeld und/oder während eines Hände-frei-Betriebs des Kraftfahrzeugs bestimmt wird. Diese Ausgestaltung sieht somit vor, dass beispielsweise auf Basis von einfachen abgespeicherten Kennfeldern die system-inhärente Reibkraft bestimmt werden kann. Alternativ oder ergänzend kann beispielsweise auch im so genannten Hände-frei-Betrieb (Hands-free-Betrieb), also die Betriebsart, bei welcher der Fahrer keine Hände am Lenkrad hat, diese Reibkraft bestimmt werden. Somit ist es ermöglicht, dass auf einfache Art und Weise beziehungsweise sehr zuverlässig und spezifisch die entsprechende Reibkraft bestimmt werden kann, wodurch sehr zuverlässig das assistierte Querbeschleunigungssignal erzeugt werden kann und somit die Sicherheit im Straßenverkehr entsprechend erhöht werden kann.

Ebenfalls vorteilhaft ist, wenn zusätzlich eine Griffkraft einer Person an der Lenkeinrichtung der Lenkanlage bestimmt wird und das assistierte Querbeschleunigungssignal zusätzlich in Abhängigkeit von der bestimmten Griffkraft adaptiert wird. Insbesondere zeigen nämlich Messungen, dass auch das Lenkmoment bei Geradeausfahrt sich von Fahrer zu Fahrer unterscheidet. Dies ist unter anderem darin begründet, dass die Berührfläche sich unterscheidet, nur eine oder auch beide Hände am Lenkrad gehalten werden, und durch die Handhaltung, beispielsweise auch da Handschuhe getragen werden, oder schlicht durch die Konstitution und Mentalität des Fahrers. Die Griffkraft des Fahrers und somit das entsprechende Lenkmoment des Fahrers, das ein Fahrerassistenzsystem überwinden muss, um einen Systemeingriff durchzuführen, ist also fahrerindividuell. Durch die Berücksichtigung der Griffkraft kann nun nicht nur die Reibkraft entsprechend berücksichtigt werden, sondern auch die Griffkraft der Person, wodurch äußerst präzise die Soll-Trajektorie erreicht werden kann.

Dabei hat es sich weiterhin als vorteilhaft erwiesen, wenn in Abhängigkeit von der bestimmten Griffkraft ein individuelles Drehmoment kontinuierlich bestimmt wird. Insbesondere kann somit das individuelle Drehmoment fortlaufend bestimmt und auch gelernt werden und als Parameter für einen potentiellen Eingriff genutzt werden. Das individuelle Drehmoment kann vorzugsweise immer dann bestimmt beziehungsweise gelernt werden, wenn sich das Kraftfahrzeug zumindest teilweise auf einer Geradeausfahrt befindet. Insbesondere kann zumindest das individuelle Drehmoment in den entsprechenden geeigneten Fahrsituationen bestimmt werden, vorzugsweise in solchen ohne Krümmung des Streckenverlaufs. Dies ermöglicht eine spezifische Bestimmung der individuellen Drehmomente, wodurch sehr präzise die Soll-Trajektorie erreicht werden kann.

Ebenfalls vorteilhaft ist, wenn das individuelle Drehmoment während einer Geradeausfahrt des Kraftfahrzeugs bestimmt wird. Somit kann hochpräzise das individuelle Drehmoment bestimmt werden, ohne dass dabei weitere Einflüsse, wie beispielsweise die Reibkraft selbst, mit zu berücksichtigen sind. Somit kann sehr präzise das individuelle Drehmoment bestimmt werden, und im späteren Verlauf bei der Adaptierung des assistierten Querbeschleunigungssignals berücksichtigt werden.

Eine weitere vorteilhafte Ausgestaltungsform sieht vor, dass das individuelle Drehmoment situationsabhängig und/oder tageszeitabhängig bestimmt und abgespeichert wird. Insbesondere da sowohl situationsabhängig als auch tageszeitabhängig das individuelle Drehmoment von einem Fahrer auf die Lenkeinrichtung beaufschlagt wird, ist somit die Berücksichtigung der entsprechenden Verkehrssituation sowie der Tageszeit vorteilhaft. Insbesondere kann dann auch vorgesehen sein, dass je nach Verkehrssituation beziehungsweise Tageszeit unterschiedliche Querbeschleunigungssignale erzeugt werden, um dem situationsspezifischen Verhalten beziehungsweise tagesspezifischen Verhalten entsprechen zu können. Dies ermöglicht den sicheren Betrieb des Kraftfahrzeugs.

In einer weiteren vorteilhaften Ausgestaltungsform ist vorgesehen, dass ein Drehmomentenverlauf auf eine Lenkeinrichtung der Lenkanlage aufgeprägt wird und in Abhängigkeit von einem davon abhängigen erfassten Lenkwinkel das individuelle Drehmoment bestimmt wird. Insbesondere wird somit das individuelle Drehmoment in geeigneten Fahrsituationen, insbesondere vorzugsweise in solchen ohne Krümmung des Streckenverlaufs, insbesondere rampenförmig, auf die Lenkeinrichtung, vorzugsweise das Lenkrad, aufgeschaltet und anhand des Lenkwinkels ermittelt, wie groß die entsprechende Griffkraft des Fahrers ist. Dazu wird detektiert, bei welchem Drehmoment ein signifikanter Lenkwinkel messtechnisch erfassbar ist. Die Aufschaltung des Drehmoments erfolgt lediglich für sehr kleine Zeitdauern, so dass einerseits der Fahrer nicht aktiv und bewusst dagegenhält, und andererseits ein mess- oder spürbarer Querversatz des Kraftfahrzeugs nicht auftritt. Dieses Verfahren wird in kontinuierliche wiederholt.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Weiterhin betrifft die Erfindung auch ein computerlesbares Speichermedium mit zumindest dem Computerprogrammprodukt nach dem vorhergehenden Aspekt.

Ebenfalls betrifft die Erfindung ein Assistenzsystem für ein zumindest teilweise assistiert betriebenes Kraftfahrzeugs, mit zumindest einer elektronischen Recheneinrichtung, wobei das Assistenzsystem zum Durchführen eines Verfahrens nach dem vorhergehenden Aspekt ausgebildet ist. Insbesondere wird das Verfahren mittels des Assistenzsystems durchgeführt.

Ein nochmals weiterer Aspekt der Erfindung betrifft ein Kraftfahrzeug mit zumindest dem Assistenzsystem nach dem vorhergehenden Aspekt. Das Kraftfahrzeug ist dabei insbesondere zumindest teilweise assistiert betrieben.

Vorteilhafte Ausgestaltungsformen des Verfahrens sind als vorteilhafte Ausgestaltungsformen des Computerprogrammprodukts, des computerlesbaren Speichermediums, des Assistenzsystems sowie des Kraftfahrzeugs anzusehen. Das Assistenzsystem sowie das Kraftfahrzeug weisen hierzu gegenständliche Merkmale auf, um entsprechende Verfahrensschritte durchführen zu können.

Eine elektronische Recheneinheit/Recheneinrichtung kann allgemein als ein Datenverarbeitungsgerät definiert werden, das mindestens einen Verarbeitungsschaltkreis enthält. Diese Recheneinheit ist in der Lage, Daten zu verarbeiten, um verschiedene Rechenoperationen durchzuführen. Solche Operationen können auch indizierte Zugriffe auf eine Datenstruktur, wie beispielsweise eine Umsetzungstabelle (LUT), einschließen.

Die Recheneinheit kann aus einer Kombination von Hardware- und Softwarekomponenten bestehen, darunter Computer, Mikrocontroller, integrierte Schaltkreise, Anwendungsspezifische Integrierte Schaltungen (ASIC), Feldprogrammierbare Gate-Arrays (FPGA), Einchipsysteme (SoC), Prozessoren wie Mikroprozessoren, zentrale Prozessoreinheiten (CPU), Grafikprozessoreinheiten (GPU) und Digitalsignalprozessoren (DSP). Die Recheneinheit kann auch einen physischen oder virtuellen Verbund von Computern oder anderen der genannten Einheiten umfassen.

In verschiedenen Ausführungsbeispielen verfügt die Recheneinheit über eine oder mehrere Hardware- und/oder Software-Schnittstellen sowie eine oder mehrere Speichereinheiten. Eine Speichereinheit kann als flüchtiger Datenspeicher, wie dynamischer Speicher mit wahlfreiem Zugriff (DRAM) oder statischer Speicher mit wahlfreiem Zugriff (SRAM), oder als nicht-flüchtiger Datenspeicher, wie Festwertspeicher (ROM), programmierbarer Festwertspeicher (PROM), löschbarer programmierbarer Festwertspeicher (EPROM), elektrisch löschbarer programmierbarer Festwertspeicher (EEPROM), Flash-Speicher oder Flash-EEPROM, ferroelektrischer Speicher mit wahlfreiem Zugriff (FRAM), magnetoresistiver Speicher mit wahlfreiem Zugriff (MRAM) oder Phasenänderungsspeicher mit wahlfreiem Zugriff (PCRAM), ausgeführt sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Im Folgenden werden Ausführungsbeispiele der Erfindung beschrieben. Hierzu zeigt:
- Fig. 1: eine schematische Seitenansicht einer Ausführungsform eines Kraftfahrzeugs mit einer Ausführungsform eines Assistenzsystems; und
- Fig. 2: ein schematisches Blockschaltbild gemäß einer Ausführungsform eines Assistenzsystems.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

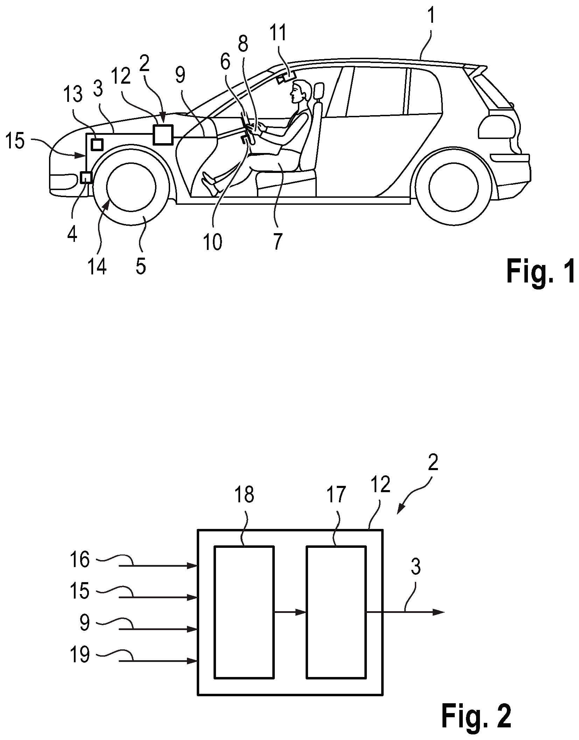

Fig. 1 zeigt eine schematische Seitenansicht einer Ausführungsform eines Kraftfahrzeugs 1. Das Kraftfahrzeug 1 ist zumindest teilweise assistiert betrieben. Insbesondere wird das Kraftfahrzeug 1 zumindest nach Level 2 gemäß SAE-Standard teilweise automatisiert betrieben. Hierzu weist das Kraftfahrzeug 1 zumindest ein Assistenzsystem 2 auf. Das Assistenzsystem 2 kann beispielsweise zum Erzeugen eines Soll-Querbeschleunigungssignals 3 für eine Querbeschleunigungseinrichtung 4 ausgebildet sein. Die Querbeschleunigungseinrichtung 4 kann beispielsweise zum Bewegen von Vorderrädern 5 ausgebildet sein. Das Kraftfahrzeug 1 weist ferner zumindest eine Lenkeinrichtung 6 auf. Die Lenkeinrichtung 6 ist beispielsweise zum Erfassen einer manuellen Lenkung durch eine Person 7, beispielsweise einen Fahrer, ausgebildet. Insbesondere wenn der Fahrer beispielsweise seine Hände 8 auf dem Lenkrad, insbesondere der Lenkeinrichtung 6, hat, kann ein entsprechendes manuelles Querbeschleunigungssignal 9 erfasst werden. Des Weiteren kann die Lenkeinrichtung 6 noch Lenkradsensoren 10, beispielsweise in Form von kapazitiven Sensoren oder Temperatursensoren, aufweisen. Des Weiteren zeigt die Fig. 1 noch eine Innenkamera 11. Ferner ist noch eine elektronische Recheneinrichtung 12 gezeigt. Des Weiteren zeigt die Fig. 1 noch eine Lenkanlage 13, wobei die Lenkanlage 13 beispielsweise die Lenkeinrichtung 6 sowie eine Fahrwerkskomponente 14 umfassen kann. Insbesondere die Lenkanlage 13, insbesondere die Lenkeinrichtung 6 sowie die Fahrwerkskomponente 14, weisen eine system-inhärente Reibkraft 15 auf.

Fig. 2 zeigt ein schematisches Blockschaltbild gemäß einer Ausführungsform des Assistenzsystems 2. Vorliegend ist insbesondere die elektronische Recheneinrichtung 12 gezeigt. Als Eingangssignal erhält hierzu die elektronische Recheneinrichtung 12 beispielsweise Umgebungsinformationen 16, auf Basis derer ein entsprechendes Ausweichmanöver beziehungsweise Fahrmanöver zu planen ist. Des Weiteren kann die elektronische Recheneinrichtung 12 als Eingangsparameter noch das manuelle Querbeschleunigungssignal 9 erhalten. Auf Basis dessen kann die elektronische Recheneinrichtung 12 insbesondere eine Soll-Trajektorie 18 für das teilautomatisierte Fahrmanöver bestimmen, wobei die Soll-Trajektorie 18 zumindest bereichsweise einen Querbeschleunigungsanteil aufweist. Es wird dann die system-inhärente Reibkraft 14 der Lenkanlage 13 mittels der elektronischen Recheneinrichtung 12 bestimmt. Es erfolgt dann das Bestimmen eines assistierten Querbeschleunigungssignals 17 für die Soll-Trajektorie 18 mittels der elektronischen Recheneinrichtung 12.

Es wird dann das assistierte Querbeschleunigungssignal 17 in Abhängigkeit von der bestimmten system-inhärenten Reibkraft 15 mittels der elektronischen Recheneinrichtung 12 angepasst.

Wie bereits erwähnt, kann bei der system-inhärenten Reibkraft 15 ein Reibmoment der Lenkeinrichtung 6 der Lenkanlage 13 und/oder ein Reibmoment der Fahrwerkskomponente 14 der Lenkanlage 14 berücksichtigt werden. Ferner kann die system-inhärente Reibkraft 15 auf Basis von zumindest einem abgespeicherten Kennfeld und/oder während eines Hände-frei-Betriebs des Kraftfahrzeugs 1 bestimmt werden.

Des Weiteren kann eine Griffkraft 19 der Person an der Lenkeinrichtung 6 bestimmt werden und das assistierte Querbeschleunigungssignal 17 zusätzlich in Abhängigkeit von der bestimmten Griffkraft 19 adaptiert werden. Dabei kann weiterhin vorgesehen sein, dass in Abhängigkeit von der bestimmten Griffkraft 19 ein individuelles Drehmoment kontinuierliche bestimmt wird. Das individuelle Drehmoment kann dabei insbesondere während einer Geradeausfahrt des Kraftfahrzeugs 1 bestimmt werden. Ferner kann dazu noch vorgesehen sein, dass das individuelle Drehmoment situationsabhängig und/oder tageszeitabhängig bestimmt und abgespeichert wird. Ebenfalls kann hierzu noch vorgesehen sein, dass ein Drehmomentenverlauf auf die Lenkeinrichtung 6 der Lenkanlage 13 aufgeprägt wird und in Abhängigkeit von einem davon abhängigen erfassten Lenkwinkel das individuelle Drehmoment bestimmt wird.

Insbesondere haben nämlich Messungen gezeigt, dass das Lenkmoment bei Geradeausfahrt sich von Fahrer zu Fahrer unterscheidet. Dies ist unter anderem darin begründet, dass die Berührfläche sich unterscheidet, nur eine oder beide Hände am Lenkrad gehalten werden, durch die Handhaltung, gegebenenfalls auch mit Handschuhen, oder schlicht durch die Konstitution oder Mentalität des Fahrers. Das Lenkmoment des Fahrers, das das Assistenzsystem 2 überwinden muss, um einen Systemeingriff durchzuführen, ist somit fahrerindividuell.

Darüber hinaus unterscheidet sich dieses Drehmoment, insbesondere das Haltemoment, was im Folgenden auch als Losbrechmoment bezeichnet werden kann, auch bei demselben Fahrer situationsbezogen, sei es durch die umgebende Verkehrssituation, beispielsweise urbaner Raum oder Autobahn, oder die Tageszeit und die Stimmung des Fahrers.

Für einen erfolgreichen automatisierten Lenkeingriff ist es somit sinnvoll, diese individuellen Drehmomente zu kennen und als Referenz für die Übersteuerbarkeit anzusetzen. Assistenzsysteme 2 zeichnen sich dadurch aus, dass diese vom Fahrer jederzeit überstimmt werden können. Ausweichsysteme beispielsweise können jederzeit überlenkt werden. Diese Grenzen werden in der Regel in Probestudien ermittelt. Die systemseitige Lenkkraft darf daher nicht beliebig hoch gewählt werden. Mit Kenntnis des Losbrechmoments kann unter Beibehaltung des abgesicherten Grenzwerts somit ein erfolgreiches Manöver, insbesondere ein automatisierter Ausweichvorgang, eingeleitet und umgesetzt werden.

Ein erster Teil der Erfindung, welcher unabhängig zu dem nachfolgenden zweiten Teil der Erfindung betrachtete werden kann, bezieht sich somit darauf, dass das individuelle Drehmoment fortlaufend gelernt werden kann und als Parameter für einen entsprechenden Eingriff des Assistenzsystems 2 abgespeichert wird. Das Haltemoment/die Griffkraft 19 kann vorzugsweise immer dann gelernt werden, wenn sich das Kraftfahrzeug 1 in Geradeausfahrt befindet und der Spurverlauf, bekannt zum Beispiel aus Kameradaten, eine weitere Geradeausfahrt erwarten lässt. Bei gesetztem Blinker kann auch ein Spurwechsel, ein Abbiegevorgang oder ähnliches zu erwarten sein und die Lernfunktion kann pausiert werden. Der Lernwert kann zum Beispiel als gleitender Mittelwert abgespeichert werden. Möglich ist auch, dass der Lernwert über das Fahrprofil, insbesondere detektiert über eine Sitzeinstellung, Anmeldung am Kraftfahrzeug 1 oder dergleichen, tageszeitabhängig und/oder in Abhängigkeit der umgebenden Verkehrssituation gelernt wird.

Zur Ermittlung des Losbrechmoments wird in geeigneten Fahrsituationen, vorzugsweise solchen ohne Krümmung des Streckenverlaufs, ein rampenförmiger Drehmomentverlauf auf das Lenkrad aufgeschaltet und anhand des Lenkwinkels ermittelt, wie groß das Haltemoment des Fahrers ist. Dazu wird detektiert, bei welchem Drehmoment ein signifikanter Lenkwinkel messtechnisch erfassbar ist. Die Aufschaltung des Drehmoments erfolgt lediglich für sehr kleine Zeitdauern, so dass einerseits der Fahrer nicht aktiv und bewusst dagegenhält und andererseits ein mess- oder spürbarer Querversatz des Kraftfahrzeugs 1 nicht auftritt. Dies kann insbesondere kontinuierliche wiederholt werden.

Alternativ kann auch der Regeleingriff eines Spurhalteassistenten dazu genutzt werden, das Haltemoment des Fahrers näherungsweise zu ermitteln. Dazu wird im Eingriffsfalle des Spurhalteassistenten das Drehmoment der Lenkaktorik in Relation zum Lenkwinkel ermittelt.

Ein zweiter Teil der Erfindung, insbesondere auch unabhängig zu dem zuvor genannten Teil der Erfindung betrachtbar, sieht vor, dass das geschwindigkeitsabhängig und system-inhärente Reibmoment der Lenkung und der nachgelagerten Fahrwerkskomponenten entweder aus abgespeicherten Kennfeldern ermittelt wird oder auch beispielsweise dann ermittelt werden kann, wenn sich das Kraftfahrzeug 1 im Hands-free-Betrieb befindet, bei welchem der Fahrer also keine Hände am Lenkrad hat. Die Erkennung erfolgt mittels eines kapazitiven Lenkrads, anderer Sensorik, insbesondere Innenraumkamera 11, oder geeigneter Algorithmen.

Mit Kenntnis des gelernten Lernwerts für das individuelle Drehmoment kann im Falle eines Systemeingriffs anhand des letzten gelernten Werts oder der Situation entsprechenden Lernwerts ein Referenz-Drehmoment aufgeprägt und dieses Drehmoment das eigentliche, für den Systemeingriff erforderliche Drehmoment, überlagert werden.

### Bezugszeichenliste

- 1: Kraftfahrzeug
- 2: Assistenzsystem
- 3: Soll-Querbeschleunigungssignal
- 4: Querbeschleunigungseinrichtung
- 5: Räder
- 6: Lenkeinrichtung
- 7: Person
- 8: Hände
- 9: manuelles Querbeschleunigungssignal
- 10: Lenkradsensor
- 11: Innenraumkamera
- 12: elektronische Recheneinrichtung
- 13: Lenkanlage
- 14: Fahrwerkskomponente
- 15: Reibkraft
- 16: Umgebungsinformation
- 17: assistiertes Querbeschleunigungssignal
- 18: Soll-Trajektorie
- 19: Griffkraft

## Patentansprüche

1. Verfahren zum Betreiben eines Assistenzsystems (2) eines zumindest teilweise assistiert betriebenen Kraftfahrzeugs (1), mit den Schritten:
- Bestimmen einer Soll-Trajektorie (18) für ein teilautomatisiertes Fahrmanöver mittels einer elektronischen Recheneinrichtung (12) des Assistenzsystems (2), wobei die Soll-Trajektorie (18) zumindest bereichsweise einen Querbeschleunigungsanteil aufweist;
- Bestimmen einer system-inhärenten Reibkraft (15) einer Lenkanlage (13) des Kraftfahrzeugs (1) mittels der elektronischen Recheneinrichtung (12);
- Bestimmen eines assistierten Querbeschleunigungssignals (17) für die Soll-Trajektorie (18) mittels der elektronischen Recheneinrichtung (12); und
- Adaptieren des assistierten Querbeschleunigungssignals (17) in Abhängigkeit von der bestimmten system-inhärenten Reibkraft (15) mittels der elektronischen Recheneinrichtung (12).

2. Verfahren nach Anspruch 1,
**dadurch gekennzeichnet, dass**
bei der system-inhärenten Reibkraft (15) ein Reibmoment einer Lenkeinrichtung (6) der Lenkanlage (13) und/oder ein Reibmoment einer Fahrwerkskomponente (14) der Lenkanlage (13) berücksichtigt werden.

3. Verfahren nach Anspruch 1 oder 2,
**dadurch gekennzeichnet, dass**
die system-inhärente Reibkraft (15) auf Basis von zumindest einem abgespeicherten Kennfeld und/oder während eines Hände-Frei-Betriebs des Kraftfahrzeugs (1) bestimmt wird.

4. Verfahren nach einem der vorhergehenden Ansprüche,
**dadurch gekennzeichnet, dass**
zusätzlich eine Griffkraft (19) einer Person an einer Lenkeinrichtung (6) der Lenkanlage (13) bestimmt wird und das assistierte Querbeschleunigungssignal (17) zusätzlich in Abhängigkeit von der bestimmten Griffkraft (19) adaptiert wird.

5. Verfahren nach Anspruch 4,
**dadurch gekennzeichnet, dass**
in Abhängigkeit von der bestimmten Griffkraft (19) ein individuelles Drehmoment kontinuierlich bestimmt wird.

6. Verfahren nach Anspruch 5,
**dadurch gekennzeichnet, dass**
das individuelle Drehmoment während einer Geradeausfahrt des Kraftfahrzeugs (1) bestimmt wird.

7. Verfahren nach Anspruch 5 oder 6,
**dadurch gekennzeichnet, dass**
das individuelle Drehmoment situationsabhängig und/oder tageszeitanhängig bestimmt und abgespeichert wird.

8. Verfahren nach einem der Ansprüche 5 bis 7,
**dadurch gekennzeichnet, dass**
ein Drehmomentenverlauf auf eine Lenkeinrichtung (6) der Lenkanlage (13) aufgeprägt wird und in Abhängigkeit von einem davon abhängigen erfassten Lenkwinkel das individuelle Drehmoment bestimmt.

9. Computerprogrammprodukt mit Programmcodemitteln, welche eine elektronische Recheneinrichtung (12) dazu veranlassen, wenn die Programmcodemittel von der elektronischen Recheneinrichtung (12) abgearbeitet werden, ein Verfahren nach einem der Ansprüche 1 bis 8 durchzuführen.

10. Assistenzsystem (2) für ein zumindest teilweise assistiert betriebenes Kraftfahrzeug (1), mit zumindest einer elektronischen Recheneinrichtung (12), wobei das Assistenzsystem (2) zum Durchführen eines Verfahrens nach einem der Ansprüche 1 bis 8 ausgebildet ist.
